# EUROPEAN PATENT APPLICATION

(11) **EP 2 194 483 A1**
(43) Date of publication of application: **09.06.2010**
(21) Application number: 09177304.4
(22) Date of filing: 27.11.2009
(51) Int. Cl.: G06K 7/00

(54) **A detection system comprising a detection device for a number of applications and one or more transponders**

(30) Priority: 02.12.2008 NL 2002273
(71) Applicant: AMB i.t. Holding B.V., 2012 PJ Haarlem (NL)
(72) Inventor: Six, Mark, 1967 HB, Heemskerk (NL); Leenheer, Robert, 2224 HJ, Katwijk (NL)
(74) Representative: van Looijengoed, Ferry Antoin Theodorus

(57) **Abstract**

The invention relates to a detection system which comprises a detection system and one or more transponders. At least one of the transponders is designed for transmitting a signal comprising one or more data packets in accordance with an application protocol associated with an application mode of the detection device. At least one of said data packets comprises an application identification code which designates the associated application mode for the detection device. The detection device comprises means for receiving the signal and means for detecting the application identification code in the signal from the transponder. The detection device is designed for assuming a number of application modes and for selecting the application mode from said application modes in dependence on the detected application identification code.

## Description

### FIELD OF THE INVENTION

The invention relates to a detection system comprising a detection device and one or more transponders.

### BACKGROUND OF THE INVENTION

The use of transponders has become quite common in various fields. Transponders, being active or being activated by an external signal, are capable of transmitting a signal in which information is stored. Said signal can be received by a detection device, which is capable of processing, for example decoding, the signal in order to obtain the information stored in the signal. Examples of such information include an identification code of the transponder, making it possible to identify the transponder, or measurement data, for example.

One of the fields where such transponders and detection device are used is the keeping of time at events, such as running contests, skating contests, vehicle races, etc. The athlete, the skater or the vehicle, respectively, is provided with a transponder, and when said transponder passes a predetermined point, the identification code transmitted by the transponder is read and the time of passing is determined, for example in the detection device.

The different applications which involve timekeeping make different demands upon the timekeeping process. In the case of large-scale running events, for example, the speed of the athlete (and thus of the transponder) is not very high, which makes it possible to register the signal from the transponder several times. On the other hand, several athletes (and thus transponders) will pass a particular detection point practically simultaneously with such applications, so that there is a risk that the signals from different transponders will coincide and thus interfere with each other. If the application concerns car racing, the reverse situation occurs. The speed of the transponders is high, but the risk of the signals interfering with each other is smaller, in view of the smaller number of participating cars. Yet other specific features apply to yet other applications.

To ensure an accurate registration and processing of the transponder signals, different protocols have been developed for different applications, which protocols take into account the particular nature of the application in question. For such applications, application-specific transponders and application-specific detection devices exist.

### SUMMARY OF THE INVENTION

There is disclosed a detection system which comprises a detection system and one or more transponders. At least one of the transponders is designed for transmitting a signal comprising one or more data packets in accordance with an application protocol associated with an application mode of the detection device. At least one of said data packets comprises an application identification code which designates the associated application mode for the detection device. The detection device comprises means for receiving the signal and means for detecting the application identification code in the signal from the transponder. The detection device is designed for assuming a number of application modes and for selecting the application mode from said application modes in dependence on the detected application identification code.

There is also proposed a detection device and a transponder for such a detection system, as well as a method for setting the detection device, a computer programme for executing said method in the detection device and a transponder signal provided with the application identification code.

Since the transponder signal comprises an application identification code, the detection device can be designed for processing transponder signals in accordance with protocols for a number of applications. When the application identification code is recognized, the detection device can be set accordingly. It is not necessary, therefore, to use a different detection device for each individual application. The detection device can process signals for several applications simultaneously, if desired.

### BRIEF DESCRIPTION OF THE FIGURES

In the figures:
Fig. 1 is a schematic view of the detection system according to an embodiment of the invention; and
Fig. 2 is a schematic view of a data packet of a transponder signal according to an embodiment of the invention.

### DETAILED DESCRIPTION OF THE FIGURES

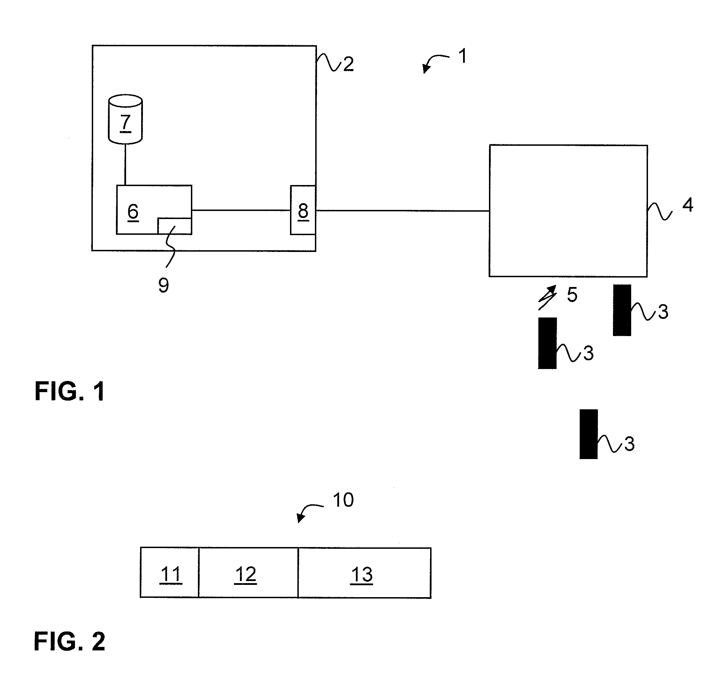

Fig. 1 is a schematic view of a detection system 1 comprising a detection device 2 and a number of transponders 3. The detection device 2 comprises an antenna 4 for receiving transponder signals 5 from the transponders 3. Active transponders 3 as well as passive transponders 3 may be used.

The detection device 2 comprises a processing unit 6 for processing the transponder signals 5. Said processing may for example comprise the decoding of the transponder signal 5 for the purpose of distilling information from the transponder signal 5. Another form of processing concerns, for example, the decryption of the transponder signal 5.

The detection device 2 is capable of processing transponder signals 5 for different applications. The detection device 2 to that end comprises a number of application modes, schematically indicated at 7 in Fig. 1 (for example a storage), which can be selected in a manner yet to be described below. Depending on the selected application mode, the detection device 2 will interpret and/or process the transponder signal 5 in the manner determined for this application mode.

The detection device 2 further comprises means 8, for example an antenna or other receiver, for receiving the transponder signal 5 and means 9 for detecting an application identification code, as will be described in more detail yet below. The means 9 may comprise software code, for example, which is executed on the processing unit 6.

As is schematically shown in Fig. 2, the transponder signal 5 from the transponder 2 comprises one or more data packets 10. The data packet 10 is built up in a manner determined in dependence on the specific application (for example go-kart races). The data packet 10 contains an application identification code 11, which designates said specific application. The data packet 10 may contain further fields, such as an identification code 12 of the transponder 3 and further data 13 containing more specific information on the object, for example, which is relevant for the application in question, as designated by code 11. The data packet 10 may comprise a number of fields, of course, and one or more of the fields of the data packet 10 may be encrypted.

The operation of the detection system 1 as shown in Fig. 1 may be as follows. A transponder 3 comes within the range of the antenna 4 and transmits a data packet 10. Said data packet is received via the receiver 8 and analysed in the processing unit 6 of the detection device 2. Means 9 are used for determining the application identification code 11. Subsequently, the processing unit 6 selects from the storage 7 an application mode associated with said code 11, and the processing unit 6 is set for processing the transponder signal 5 in accordance with the signal protocol determined for said application mode. This setting enables the processing unit 6 to process the transponder signal 5 in a correct and accurate manner and makes it possible to reduce the information from the fields 12 and/or 13 in the correct manner.

One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

While the forgoing is directed to embodiments of the present invention, other and further embodiments of the invention may be devised without departing from the basic scope thereof. Therefore, the scope of the present invention is determined by the claims that follow.

## Claims

1. A detection system comprising a detection device and one or more transponders, wherein at least one of the transponders is designed for transmitting a signal comprising one or more data packets in accordance with an application protocol associated with an application mode of the detection device, wherein at least one of said data packets comprises an application identification code which designates the associated application mode for the detection device, and wherein the detection device comprises means for receiving the signal and means for detecting the application identification code in the signal from the transponder, further being configured for assuming a number of application modes and for selecting the application mode from said application modes in dependence on the detected application identification code.

2. The detection system according to claim 1, wherein the data packet comprising the application identification code further comprises at least one of an identification code of the transponder and one or more fields for application-specific data.

3. The detection system according to any one or more of the preceding claims, wherein the detection device comprises a processing unit designed for processing the data packet in dependence on the detected application identification code.

4. The detection system according to claim 3, wherein the processing unit is configured for decoding the data packet in dependence on the detected application identification code.

5. A detection device configured for receiving and processing signals from transponders, wherein at least one of the transponders is configured for transmitting a signal comprising one or more data packets in accordance with an application protocol associated with a specific application mode of the detection device, and wherein at least one of said data packets comprises an application identification code which designates the associated application mode for the detection device, comprising:
- means for receiving the signal;
- means for detecting the application identification code in the signal from the transponder;
- means for selecting the application mode from said application modes in dependence on the detected application identification code.

6. The detection device according to claim 5, wherein the detection device comprises a processing unit configured for processing at least one of an identification code in the signal from the transponder and one or more fields in the signal, which fields comprise application-specific data.

7. The detection device according to any one or more of the preceding claims 4-6, wherein the detection device comprises a processing unit for processing the data packet in dependence on the detected application identification code.

8. The detection device according to claim 7, wherein the detection device comprises a processing unit for decoding the data packet in dependence on the detected application identification code.

9. A transponder configured for transmitting a signal to a detection device, wherein the detection device is capable of assuming a number of application modes, wherein the signal comprises one or more data packets in accordance with an application protocol associated with an application mode of the detection device, which application identification code designates the application mode for the detection device that is to be selected from the application modes of the detection device.

10. The transponder according to claim 9, wherein the data packet comprising the application identification code further comprises at least one of an identification code of the transponder and one or more fields for application-specific data.

11. A method for setting a detection device, which detection device is configured for communicating with one or more transponders, wherein at least one of the transponders is configured for transmitting a signal comprising one or more data packets in accordance with an application protocol associated with an application mode of the detection device, wherein at least one of said data packets comprises an application identification code which designates the associated application mode for the detection device, comprising the steps of:
- receiving the signal from the transponder;
- detecting the application identification code in the signal;
- selecting the application mode from a number of application modes in dependence on the detected application identification code;
- setting the detection device in accordance with the selected application mode.

12. The method according to claim 11, wherein said setting of the detection device in accordance with the selected application mode makes it possible for the signal from the transponder to be decoded in accordance with a protocol associated with the application mode.

13. A computer programme comprising software code portions designed for carrying out the steps of the method according to claim 11 or 12 when the computer programme is executed on a detection device.

14. A transponder signal according to an application protocol for a detection device, comprising at least one data packet provided with an application identification code which designates an associated application mode for the detection device.
